**Europäisches Patentamt**

**European Patent Office**

**Office européen des brevets**

(19)

(11) Veröffentlichungsnummer : **0 378 993 B1**

(12)

# EUROPÄISCHE PATENTSCHRIFT

(45) Veröffentlichungstag der Patentschrift :
**19.05.93 Patentblatt 93/20**

(21) Anmeldenummer : **90100107.3**

(22) Anmeldetag : **04.01.90**

(51) Int. Cl.⁵ : **C08L 33/12,** C08L 33/14,
C09D 133/12, C09D 133/14,
C09J 133/12, C09J 133/14,
// (C08L33/12, 33:14),
(C08L33/14, 33:12)

(54) **Nichtwässrige Kunststoffzubereitungen.**

(30) Priorität : **14.01.89 DE 3900933**

(43) Veröffentlichungstag der Anmeldung :
**25.07.90 Patentblatt 90/30**

(45) Bekanntmachung des Hinweises auf die
Patenterteilung :
**19.05.93 Patentblatt 93/20**

(84) Benannte Vertragsstaaten :
**BE DE ES FR GB IT SE**

(56) Entgegenhaltungen :
**EP-A- 0 179 954**
**DE-A- 3 402 016**

(73) Patentinhaber : **BASF Aktiengesellschaft
Carl-Bosch-Strasse 38
W-6700 Ludwigshafen (DE)**

(72) Erfinder : **Filges, Ulrich, Dr.
Albert-Einstein-Allee 33
W-6703 Limburgerhof (DE)**
Erfinder : **Aydin, Oral, Dr.
Sophienstrasse 14
W-6800 Mannheim 1 (DE)**
Erfinder : **Anders, Hermann
Remigiusstrasse 45
W-6730 Neustadt (DE)**

## Beschreibung

Die vorliegende Erfindung betrifft nichtwäßrige Kunststoffzubereitungen, im wesentlichen enthaltend

A) 100 Gew.-Teile wenigstens eines festen feinteiligen Kunststoffs, der aus

a) 30 bis 100 Gew.% Methacrylsäuremethylester (Monomeres I),

b) 0 bis 70 Gew.% eines Acrylsäureesters eines $C_1$- bis $C_8$-Alkanols oder eines Methacrylsäureesters eines $C_2$- bis $C_8$-Alkanols oder eines Gemisches dieser Monomeren (Monomere II),

c) 0 bis 15 Gew.% einer 3 bis 5 C-Atome enthaltenden $\alpha,\beta$-monoethylenisch ungesättigten Mono- und/oder Dicarbonsäure (Monomere III),

d) 0 bis 20 Gew.% copolymerisierbaren Monomeren, die mindestens eine stickstoffbasische Gruppe und/oder eine Hydroxylgruppe enthalten (Monomere IV) und

e) 0 bis 5 Gew.% sonstigen copolymerisierbaren Monomeren (Monomere V), in polymerisierter Form, aufgebaut ist,

B) 30 bis 300 Gew.-Teile wenigstens eines flüssigen Polymerisats, das aus

a) 5 bis 100 Gew.% Glycidylacrylat und/oder -methacrylat (Monomere VI)

b) 0 bis 95 Gew.% eines Acrylsäure- oder Methacrylsäureesters eines $C_1$- bis $C_8$-Alkanols oder eines Gemisches dieser Monomeren (Monomere VII) und

c) 0 bis 30 Gew.% sonstigen copolymerisierbaren Monomeren (Monomere VIII), in polymerisierter Form, aufgebaut ist,

C) 0 bis 300 Gew.-Teile eines oder mehrerer inerter Füllstoffe und

D) 0 bis 50 Gew.-Teile eines oder mehrerer die Haftung verbessernder Mittel.

Außerdem betrifft die Erfindung die Verwendung dieser Zubereitungen als Klebe-, Dichtungs- und Beschichtungsmassen.

Aus der DE-B 24 54 235 sind nichtwäßrige Kunststoffzubereitungen bekannt, die als Basispolymere feinteilige Homopolymerisate des Methacrylsäuremethylesters oder Copolymerisate dieses Monomeren mit $C_1$- bis $C_{10}$-Alkylacrylaten und/oder $C_2$- bis $C_{10}$-Alkylmethacrylaten und als organische Flüssigkeit Phthalsäureester, Phosphorsäureester, Glykolsäureester, hochsiedende Alkylarylkohlenwasserstoffe oder Etherverbindungen enthalten. Diese Kunststoffzubereitungen haben die Eigenschaften von sogenannten Plastisolen, d.h. im kalten Zustand verhalten sie sich wie eine pastenförmige, relativ leicht streichbare Dispersion, wogegen sie bei Erwärmung zu einer zähen kautschukartigen Masse gelieren. Wegen dieser Eigenschaft finden die Pastisole als Klebe-, Dichtungs- und Beschichtungsmassen Verwendung. Aus der DE-B 24 54 235 und aus der DE-B 25 29 732 ist außerdem bekannt, daß das Haftvermögen dieser Kunststoffmassen verbessert werden kann, indem man in die Basispolymere in untergeordneten Mengen Monomere mit freien Carboxyl-, Hydroxyl-, Epoxy-, Amino- oder heterocyclischen Gruppen mit mindestens einem N-Atom im Ring einpolymerisiert und/oder indem man diesen Kunststoffmassen geeignete Haftvermittler zusetzt, doch vermag auch das Haftvermögen dieser Kunststoffmassen im verfestigten Zustand auf metallischen Substraten nicht voll zu befriedigen. Der vorliegenden Erfindung lag daher die Aufgabe zugrunde, diesem Nachteil mittels besser geeigneten nichtwäßrigen Kunststoffzubereitungen abzuhelfen.

Aus der DE-A-3402016 sind Mischungen von festen Polymerisaten mit ebenfalls festen Polymerisaten, welche Glycidyl(meth)acrylat enthalten, und ihre Verwendung in Plastisolen bekannt.

Demgemäß wurden die als Plastisole vorliegenden eingangs definierten Kunststoffzubereitungen gefunden.

Als feinteilige Kunststoffe A) kommen sowohl Homo- als auch Copolymerisate des Methacrylsäuremethylesters in Betracht. Bevorzugt werden Copolymerisate eingesetzt, die aus 50 bis 90 Gew.% Methacrylsäuremethylester aufgebaut sind. Als Comonomere kommen insbesondere die Monomeren II in Betracht, wobei die Ester der Acryl- oder Methacrylsäure, die sich von den Alkanolen Ethanol, iso-Propanol, n- und iso-Butanol, n-Hexanol, 2-Ethylhexanol sowie im Falle der Acrylsäure von Methanol ableiten, vorzugsweise einpolymerisiert werden. Besonders bevorzugte Monomere II sind Methylacrylat, Ethylacrylat und 2-Ethylhexylacrylat.

Darüber hinaus enthält die Komponente A) in vorteilhafter Weise die freie funktionelle Gruppen tragenden Monomeren III und IV einpolymerisiert. Bevorzugte Monomere III sind Acryl-, Methacryl- und Itaconsäure, von denen die Methacrylsäure besonders bevorzugt wird. Als Monomere IV werden mit Vorteil die Nitrile und die Säureamide der Acryl- oder Methacrylsäure sowie die Ester dieser Säuren mit niederen aliphatischen Hydroxy- oder Aminoalkoholen wie Hydroxyethylacrylat, Hydroxyethylmethacrylat und N,N-Dimethylaminoethylacrylat eingebaut. Geeignete Monomere IV sind ferner Vinylverbindungen, welche eine heterocyclische Gruppe mit mindestens einem basischen Stickstoffatom im Ring enthalten, wie N- oder C-Vinylverbindungen des Imidazols, wobei N-Vinylimidazol besonders bevorzugt ist.

Zusätzlich können am Aufbau der Komponente A) in untergeordneten Mengen, bis zu 5 Gew.% sonstige copolymerisierbare Monomere wie Vinylester von $C_2$- bis $C_4$-Alkansäuren beteiligt sein.

2

Die Herstellung der feinteiligen Polymerisate A) erfolgt vorzugsweise durch radikalische Polymerisation, wobei die Suspensions- und die Emulsionspolymerisation gegenüber der Polymerisation in Lösung, in Substanz sowie gegenüber der Fällungspolymerisation bevorzugt sind. In besonders vorteilhafter Weise wird durch Polymerisation der jeweiligen Monomeren in wäßrigem Medium unter den bekannten Bedingungen der Emulsionspolymerisation in Gegenwart von wasserlöslichen radikalbildenden Initiatoren und Emulgatoren sowie gegebenenfalls in Gegenwart von Schutzkolloiden und Reglern sowie weiterer Hilfsmittel eine wäßrige Kunststoffdispersion hergestellt, deren Feststoffgehalt üblicherweise 30 bis 60 Gew.% beträgt.

Die Überführung der erhaltenen Dispersion in ein trockenes Pulver erfolgt anschließend in an sich bekannter Weise, z.B. durch Sprühtrocknung, Fällung oder Gefriertrocknung. Das Verfahren der Sprühtrocknung wird normalerweise bei Polymerisaten mit einer Glasübergangstemperatur (Tg) oberhalb von 20°C bevorzugt, während bei Polymerisaten mit einer Tg unterhalb von 20°C das Fällen oder die Gefriertrocknung von Vorteil sind. Durch anschließende Zugabe geeigneter Hilfsmittel wie feinteiliger Kieselsäure kann in den Fällen niederer Glasübergangstemperaturen einem Verkleben der erhaltenen Kunststoffteilchen entgegengewirkt werden.

Zweckmäßigerweise wird die Komponente A) mit einer durchschnittlichen Korngröße von 0,05 bis 500 μm (arithmetisches Mittel der Korngrößtdurchmesser) eingesetzt. Anwendungstechnisch bevorzugt ist der Bereich von 0,1 bis 20 μm, wobei eine durchschnittliche Korngröße von 0,5 bis 10 μm besonders bevorzugt ist. Die gewünschte Partikelgröße läßt sich durch Menge und Typ des Emulgators steuern, wobei die Kunststoffteilchen um so größer werden, je kleiner die Emulgiermittelmenge ist.

Bezogen auf die Menge der eingesetzten Monomeren werden im allgemeinen zwischen 1 und 5 Gew.% Emulgator eingesetzt.

Als Emulgatoren haben sich insbesondere ethoxylierte Alkylphenole (EO-Grad: 3 bis 30, Alkylrest: $C_6$ bis $C_{10}$) und/oder ethoxylierte Fettalkohole (EO-Grad 5 bis 50, Alkylrest: $C_8$ bis $C_{25}$), die beide sulfatiert sein können, sowie die Alkalimetallsalze der sulfatierten Derivate bewährt.

Als wasserlösliche Polymeriationsinitiatoren kommen vor allem Peroxidisulfate wie Ammonium- oder Natriumperoxidisulfat oder kombinierte Systeme, die ein organisches Reduktionsmittel und ein Peroxid enthalten, z.B. Formaldehydnatriumsulfoxylat/Wasserstoffperoxid, in Betracht. Vornehmlich werden Polymerisate A) eingesetzt, die in Tetrahydrofuran einen K-Wert von 20 bis 130, bevorzugt 30 bis 100, aufweisen. Der K-Wert ist eine relative Viskositätszahl, die in Analogie zur DIN 53 726 bei 25°C bestimmt wird. Gemessen wird hierbei die Fließgeschwindigkeit einer Lösung aus 0,1 g Polymerisat pro ml Tetrahydrofuran (THF), relativ zur Fließgeschwindigkeit von reinem THF. Er charakterisiert den mittleren Polymerisationsgrad des Polymerisates, der sich durch Steuerung der Polymerisationsbedingungen in bekannter Weise beeinflußen läßt. Die Polymerisationstemperatur beträgt vorzugsweise 70 bis 90°C.

Definitionsgemäß kommen als solvatisierende Komponente B) Polymerisate in Betracht, die die Ester des Glycidols mit Acryl- oder Methacrylsäure in reiner oder in gemischter Form enthalten. Als weitere Monomere können in B) die Monomeren VII mit bis zu 95 Gew.% enthalten sein, wobei die Ester der Acrylsäure oder Methacrylsäure, die sich von den Alkoholen Methanol, Ethanol, n-Butanol oder 2-Ethylhexanol ableiten, vorzugsweise einpolymerisiert werden. Darüber hinaus können am Aufbau der Komponente B) sonstige copolymerisierbare Monomere wie Acrylnitril, Methacrylnitril, Vinylester niederer Alkansäuren, die Ester der Acryl- oder Methacrylsäure mit niederen aliphatischen Hydroxyalkoholen sowie Styrol in Mengen bis zu 30 Gew.% beteiligt sein.

Von besonderem Interesse sind Polymere B), die die Ester des Glycidols mit Acryl- oder Methacrylsäure in Mengen von 20 bis 60 Gew.% enthalten. Der Anteil der Monomeren VII liegt vorzugsweise im Bereich von 30 bis 80 Gew.%. Der K-Wert von B) in THF sollte 8 bis 30, bevorzugt 8 bis 18, betragen.

Die Herstellung erfolgt zweckmäßig in an sich bekannter Weise durch radikalische Polymerisation der jeweiligen Monomeren in Substanz oder in Lösung, in Gegenwart von mercaptogruppenhaltigen Molekulargewichtsreglern wie 2-Mercaptoethanol, Ethanthiol, Dodecanthiol, Thiophenol, Thioglycerin oder Estern der Thioglycolsäure. Bevorzugte Lösungsmittel sind aromatische Kohlenwasserstoffe wie Toluol oder Xylole. Im allgemeinen wird unter Lösungsmittelrückfluß polymerisiert. Als geeignete Initiatoren haben sich insbesondere organische Peroxide wie tert.-Butylperbenzoat oder Dilaurylperoxid erwiesen. Die nicht umgesetzten Monomeren sowie gegebenenfalls das Lösungsmittel werden nach beendeter Polymerisation, z.B. durch Verdampfen im Vakuum, von den flüssigen Polymeren abgetrennt.

Neben den obligatorischen Bestandteilen A) und B) können den erfindungsgemäßen Kunststoffzubereitungen Füllstoffe C) und die Haftung verbessernde Mittel D) als Hilfsstoffe zugesetzt werden.

Die Füllstoffe dienen in erster Linie zur Erhöhung der Viskosität sowie zur Verbesserung der Abriebfestigkeit. Geeignete Füllstoffe sind beispielsweise Aluminiumsilicate, Quarz, gefällte oder pyrogene Kieselsäure, Leicht- und Schwerspat, Talcum, Dolomit, Calciumcarbonat, Ruß sowie farbgebende Pigmente. Im allgemeinen werden die Füllstoffe in feiner Körnung zugegeben. Die durchschnittliche Korngröße, als arithmetisches Mittel der jeweils größten Durchmesser, beträgt bevorzugt 0,5 bis 200 μm. In der Regel werden jedoch Füllstoff-freie Kunststoffzubereitungen bevorzugt.

Beispiele für haftungsverbessernde Mittel D) sind Triethylenglycoldimethacrylat oder Trimethyloltrimethacrylat in Kombination mit Peroxiden, ferner flüssige oder feste Phenol- bzw. Resorcinharze mit geringem Formaldehydgehalt sowie Aminosilane oder mehrbasische Carbonsäuren wie Maleinsäure oder Itaconsäure. In untergeordneten Mengen können die erfindungsgemäßen Kunststoffzubereitungen gegebenenfalls zusätzlich Viskositätsregler, Sedimentationsverhüter, Verlaufsverbesserer, Riechstoffe, Netzmittel oder andere in der Beschichtungstechnologie übliche Hilfsstoffe enthalten.

Die Herstellung der gebrauchsfertigen Zubereitungen aus den verschiedenen Komponenten A) bis D) und gegebenenfalls weiteren Hilfsstoffen erfolgt in vorteilhafter Weise, indem man in die flüssige Komponente B) die anderen Ausgangsbestandteile einrührt. Die resultierenden nichtwäßrigen Kunststoffzubereitungen sind flüssige bis pastenförmige Plastisole, die sich beim Erhitzen verfestigen. In Abhängigkeit von der Zusammensetzung der Kunststoffzubereitungen sind dazu Temperaturen von 60 bis 240°C erforderlich. Die benötigte Verfestigungsdauer liegt zwischen 2 Minuten und 2 Stunden. Üblicherweise erfordern Kunststoffzubereitungen, die Komponenten A) mit niedriger Tg enthalten, relativ niedere Verfestigungstemperaturen und kurze Verfestigungsdauern, während bei Komponenten A) mit hoher Tg hohe Verfestigungstemperaturen und lange Verfestigungsdauern benötigt werden. Mit zunehmender Verfestigung wird in der Regel auch eine Zunahme des Haftvermögens beobachtet. Bei Raumtemperatur erfolgt die Aushärtung der erfindungsgemäßen Kunststoffzubereitungen normalerweise so langsam, daß in der Regel eine für praktische Anwendungen ausreichende Lagerstabilität gegeben ist. Die beiden wesentlichen Bestandteile A) und B) sind gut miteinander verträglich, d.h. die gelierten Plastisole sind üblicherweise homogene Massen, aus denen die Komponente B) praktisch nicht ausschwitzt (Löschblatt-Test).

Die erfindungsgemäßen Plastisole zeichnen sich durch ein erhöhtes Haftvermögen im gelierten Zustand; insbesondere auf metallischen Substraten, aus und werden bevorzugt als Klebe-, Dichtungs- und Beschichtungsmassen eingesetzt. Sie eignen sich insbesondere zum Verkleben und Beschichten von Metallen und werden mit Vorteil als Unterbodenschutz sowie zur Nahtabdichtung von Schweißnähten im Automobilsektor eingesetzt. Ein weiteres typisches Einsatzgebiet ist die Imprägnierung und Beschichtung von textilen Geweben, Fußbodenbelägen oder Substraten aus Kunstleder. Dabei kann die Verarbeitung der Kunststoffzubereitungen beispielsweise durch Aufspachteln, Aufstreichen mit einem Pinsel, Aufspritzen mit einer Farbpistole, Aufrakeln, Kalandrieren, Gießen oder Tauchen erfolgen. Das für die Erhärtung erforderliche Erhitzen kann beispielsweise mittels Heißluft oder durch Bestrahlen im Infrarot-Bereich erfolgen.

Beispiele

Beispiel 1

Herstellung verschiedener Emulsionspolymerisate A)

Allgemeine Arbeitsvorschrift

Eine Mischung aus
245 g      Wasser
50 g      Monomermischung A
0,6 g      Ammoniumperoxidisulfat und
0,5 g      Emulgator (Na-Salz von ethoxyliertem (EO-Grad: 25) und sulfatiertem p-isooctylphenol)
wurde auf 85°C erhitzt und nach 15 min im Laufe von 2,5 h bei dieser Temperatur unter Rühren mit einer Emulsion aus
240 g      Wasser
450 g      Monomermischung A und
5 g      Emulgator
und dazu synchron in einem separaten Zulauf mit einer Lösung von
2,4 g      Ammoniumperoxidisulfat in
80 g      Wasser
versetzt. Danach wurde die Polymerisation noch eine Stunde fortgesetzt. Anschließend wurde die erhaltene Kunststoffdispersion durch Sprühtrocknung in ein feinteiliges Pulver überführt, dessen durchschnittliche Korngröße in allen Fällen 1 bis 50 betrug. Die Zusammensetzung der erhaltenen Polymerisate A1 bis A23 sowie die zugehörigen K-Werte gehen aus Tabelle 1 hervor.

Tabelle 1

Emulsionspolymerisate A)

| Gew.% Monomere | 1 | 2 | 3 | 4 | 5 | 6 | 7 | 8 | 9 | 10 | 11 | 12 |
|---|---|---|---|---|---|---|---|---|---|---|---|---|
| Methylmethacrylat | 100 | 90 | 80 | 70 | 60 | 70 | 70 | 85 | 80 | 78 | 76 | 72 |
| Ethylacrylat | | | 20 | | 40 | | | | 18 | 18 | 18 | 18 |
| Methylacrylat | | | | | | 30 | | | | | | |
| n-Butylmethacrylat | | | | | | | 30 | 15 | | | | |
| 2-Ethylhexylacrylat | | 10 | | 30 | | | | | | | | |
| Methacrylsäure | | | | | | | | | 2 | 4 | 6 | 10 |
| Methacrylamid | | | | | | | | | | | | |
| N,N'-Dimethylamino-ethylacrylat | | | | | | | | | | | | |
| Hydroxyethylacrylat | | | | | | | | | | | | |
| Hydroxyethylmethacrylat | | | | | | | | | | | | |
| N-Vinylimidazol | | | | | | | | | | | | |
| K-Wert | 44 | 55 | 61 | 58 | 61 | 65 | 60 | 67 | 55 | 56 | 58 | 61 |

EP 0 378 993 B1

## Tabelle 1 (Fortsetzung)

Emulsionspolymerisate A)

| Gew.% Monomere | 13 | 14 | 15 | 16 | 17 | 18 | 19 | 20 | 21 | 22 | 23 |
|---|---|---|---|---|---|---|---|---|---|---|---|
| Methylmethacrylat | 67 | 80 | 78 | 79 | 84 | 76 | 66 | 56 | 76 | 61 | 76 |
| Ethylacrylat | 18 | 18 | 18 | 20 | | 18 | 28 | 38 | 22 | 18 | 18 |
| Methylacrylat | | | | | | | | | | | |
| n-Butylmethacrylat | | | | | 15 | | | | | | |
| 2-Ethylhexylacrylat | | | | | | | | | | | |
| Methacrylsäure | 15 | | | | | | | | | | |
| Methacrylamid | | 2 | 4 | | | | | | | | |
| N,N'-Dimethylamino-ethylacrylat | | | | 1 | | 3 | 3 | 3 | 1 | 3 | 3 |
| Hydroxyethylacrylat | | | | | | 3 | 3 | 3 | 1 | | 3 |
| Hydroxyethylmethacrylat | | | | | 1 | | | | | 18 | |
| N-Vinylimidazol | | | | | | | | | | | |
| K-Wert | 64 | 56 | 57 | 73 | 66 | 49 | 50 | 49 | 94 | 80 | 52 |

## Beispiel 2

Herstellung verschiedener Lösungspolymerisate B)

Allgemeine Arbeitsvorschrift

100 g Toluol wurden unter Rückfluß im Laufe von 2,5 Stunden mit einer Mischung aus

525 g     Monomeren B
75 g     Molekulargewichtsregler

und dazu synchron in einem separaten Zulauf mit einer Lösung von

10 g     tert.-Butylperbenzoat in
100 g     Toluol

versetzt. Danach wurde die Polymerisation noch 30 Minuten fortgesetzt. Anschließend wurden das Lösungsmittel und die Restmonomeren durch Verdampfen im Vakuum bis auf einen Restgehalt von weniger als 0,1 Gew.% entfernt. Die Zusammensetzung der erhaltenen flüssigen Polymerisate B1) bis B19) sowie die zugehörigen K-Werte gehen aus Tabelle 2 hervor.

Tabelle 2

Emulsionspolymerisate B)

| Monomere u. Regler (Gew.%) | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|
| Glycidylmethacrylat | 50 | 38 | 25 | 13 | 38 | 63 | 50 | 38 | 25 | 13 | 5 | 38 | 38 | 45 | 48 | 28 | 38 | 38 | 40 |
| Ethylacrylat | 43 | 55 | 68 | 80 | 46 | | | | | | | | | | | | | | |
| n-Butylacrylat | | | | | | 30 | 43 | 55 | 68 | 80 | 88 | 55 | 55 | 50 | 50 | | 42 | 48 | 40 |
| n-Butylmethacrylat | | | | | | | | | | | | | | | | 65 | | | |
| Acrylnitril | | | | | | | | | | | | | | | | | 14 | 8 | |
| Hydroxyethylacrylat | | | | | | | | | | | | | | | | | | | 14 |
| Thiophenol | | | | | | | | | | | | 7 | | | | | | | |
| Thioglycerin | | | | | | | | | | | | | 7 | | | | | | |
| 2-Mercaptoethanol | 7 | 7 | 7 | 7 | 16 | 7 | 7 | 7 | 7 | 7 | 7 | | | 5 | 2 | 7 | 6 | 6 | 6 |
| K-Wert | 10 | 10 | 10 | 9 | 10 | 11 | 10 | 10 | 10 | 9 | 12 | 12 | 12 | 10 | 18 | 10 | 11 | 11 | 12 |

Beispiel 3

Untersuchung der Verträglichkeit der Komponenten A) und B) in verschiedenen Kunststoffzubereitungen

Zu 10 g eines Lösungspolymerisates B) aus Beispiel 2 wurden jeweils 10 g eines Emulsionspolymerisates A) aus Beispiel 1 eingerührt. Aus den erhaltenen Kunststoffzubereitungen wurden anschließend bei 130°C durch Pressen (10 min) Kunststoff-Folien einer Breite von 100 mm und einer Foliendicke von 2 mm hergestellt. Nach 8 Tagen (Normalklima) wurde mit Hilfe eines Löschblattes die Trockenheit und Klebrigkeit der Folienoberfläche überprüft und danach die Verträglichkeit der Ausgangskomponenten qualitativ bewertet. Zusätzlich wurden nach DIN 53 455 die Reißfestigkeit (die Zugspannung im Augenblick des Reißens) und die Reißdehnung (die auf die ursprüngliche Meßlänge des Probekörpers, Nr. 3 nach DIN 53 455, bezogene Längenänderung im Augenblick des Reißens) bestimmt. Die Prüfgeschwindigkeit betrug 100 mm/min. Auf gleiche Art und Weise wurden Kunststoffzubereitungen hergestellt und untersucht, die ein Gewichtsverhältnis A) : B) von 1,5 : 1 bzw. 2 : 1 aufweisen. Die Ergebnisse enthält Tabelle 3.

Tabelle 3

| Zusammensetzung | Reißfestigkeit $[N/mm^2]$ | Reißdehnung [%] | Verträglichkeit |
|---|---|---|---|
| A:B = 1 : 1 | | | |
| A1/B8 | 5,1 | 80 | befriedigend |
| A3/B8 | 3,9 | 290 | sehr gut |
| A9/B8 | 3,1 | 152 | sehr gut |
| A10/B8 | 7 | 106 | sehr gut |
| A11/B8 | 6,1 | 67 | sehr gut |
| A12/B8 | 10,8 | 26 | gut |
| A13/B8 | 13,7 | 1 | ausreichend |
| A9/B9 | 4,9 | 148 | gut |
| A10/B9 | 5,8 | 97 | befriedigend |
| A11/B9 | 5,1 | 38 | ausreichend |
| A16/B8 | 4 | 315 | sehr gut |
| A6/B9 | 3,7 | 260 | befriedigend |
| A19/B8 | 0,6 | 127 | sehr gut |
| A20/B8 | 0,5 | 140 | sehr gut |
| A21/B8 | 4,5 | 380 | sehr gut |
| A14/B8 | 4,7 | 243 | sehr gut |
| A15/B8 | 4,5 | 211 | sehr gut |
| A22/B8 | 7,1 | 124 | befriedigend |

| Zusammensetzung | Reißfestigkeit [N/mm²] | Reißdehnung [%] | Verträglichkeit |
|---|---|---|---|
| A7/B8 | 5,1 | 256 | sehr gut |
| A4/B8 | 1,3 | 418 | sehr gut |
| A2/B8 | 4 | 153 | sehr gut |
| A18/B5 | 4,7 | 114 | sehr gut |
| A18/B12 | 1,6 | 147 | sehr gut |
| A18/B13 | 4,2 | 12 | befriedigend |
| A18/B17 | 5,1 | 17,2 | sehr gut |
| A18/B18 | 6 | 46 | sehr gut |
| A18/B19 | 6,4 | 23 | befriedigend |
| A18/B6 | 11,2 | 51 | sehr gut |
| A18/B7 | 5 | 150 | sehr gut |
| A18/B8 | 3,2 | 195 | sehr gut |
| A18/B9 | 2,2 | 236 | gut |
| A18/B10 | 2 | 203 | befriedigend |
| A18/B11 | 1,5 | 50 | ausreichend |
| A18/B1 | 7 | 168 | sehr gut |
| A18/B2 | 3,1 | 219 | sehr gut |
| A18/B3 | 2,7 | 200 | gut |
| A18/B4 | 1,6 | 205 | gut |
| A18/B16 | 6,5 | 110 | gut |
| A18/B14 | 4,3 | 49 | sehr gut |
| A18/B15 | 3,6 | 75 | gut |
| A:B = 1,5 : 1 | | | |
| A18/B7 | 10,1 | 107 | sehr gut |
| A18/B8 | 8,1 | 151 | sehr gut |
| A18/B9 | 4,1 | 146 | sehr gut |
| A18/B10 | 3,7 | 97 | gut |
| A18/B11 | 2,9 | 56 | befriedigend |
| A18/B1 | 12,6 | 100 | sehr gut |
| A18/B2 | 7,6 | 211 | sehr gut |
| A18/B3 | 4,6 | 109 | gut |
| A18/B4 | 4,8 | 133 | befriedigend |
| A18/B15 | 6,4 | 18 | gut |
| A:B = 2 : 1 | | | |
| A18/B9 | 7,7 | 147 | sehr gut |
| A18/B10 | 5,7 | 56 | sehr gut |
| A18/B11 | 5,5 | 47 | befriedigend |

Beispiel 4

Bestimmung der Klebfestigkeit verschiedener Metallverklebungen

Zwei Streifen aus V2A-Stahl wurden unter Anwendung verschiedener Kunststoffzubereitungen, die die jeweiligen Komponenten A) und B) im Gewichtsverhältnis 1 : 1 enthielten, miteinander verklebt (3 cm² Flächenklebung, Schichtdicke in nicht verfestigtem Zustand 0,18 bis 0,64 mm). Die Verfestigungsdauer lag zwischen 30 min und 1,5 h, die Verfestigungstemperaturen waren 120, 160 oder 180°C. Anschließend wurde nach DIN 53 283 mit einer Zugprüfmaschine (Vorschubgeschwindigkeit 5 mm/min) die Klebfestigkeit (Höchstkraft in $N/mm^2$) bestimmt. Die Ergebnisse enthält Tabelle 4. In allen Fällen wurde ein Adhäsionsbruch beobachtet. Die Vergleichsversuche (V1 bis V3) beziehen sich auf Bsp. 1 aus der DE-B 25 29 732 und enthalten als Komponente B) Dibenzyltoluol oder ein Gemisch aus 99 Gew.% Dibenzyltoluol und 1 Gew.% Maleinsäure. Die durchschnittliche Korngröße der Emulsionspolymerisate A8) und A17 betrug 2,1 μm.

Tabelle 4

| Zusammensetzung | Schichtdicke (mm) | Verfestigungs- bedingungen (Zeit/Temperatur) | Klebfestigkeit ($N/mm^2$) |
|---|---|---|---|
| A8/B7 | 0,30 | 30 min/120 | 1,0 |
| A8/B7 | 0,30 | 30 min/160 | 1,9 |
| A8/B7 | 0,30 | 30 min/180 | 4,1 |
| A8/Dibenzyltoluol (V1) | 0,30 | 30 min/120 | keine Verklebung |
| A8/Dibenzyltoluol (V1) | 0,30 | 30 min/160 | keine Verklebung |
| A8/Dibenzyltoluol (V1) | 0,30 | 30 min/180 | keine Verklebung |
| A17/Dibenzyltoluol (V2) | 0,30 | 30 min/120 | 0,9 |
| A17/Dibenzyltoluol (V2) | 0,30 | 30 min/160 | 1,0 |
| A17/Dibenzyltoluol (V2) | 0,30 | 30 min/180 | 1,2 |
| A17/Dibenzyltoluol +Maleinsäure (V3) | 0,30 | 30 min/120 | 1,2 |
| A17/Dibenzyltoluol +Maleinsäure (V3) | 0,30 | 30 min/160 | 1,6 |
| A17/Dibenzyltoluol +Maleinsäure (V3) | 0,30 | 30 min/180 | 2,1 |
| A3/B7 | 0,30 | 30 min/180 | 4,0 |
| A16/B7 | 0,30 | 30 min/180 | 4,6 |
| A23/B7 | 0,30 | 30 min/180 | 5,5 |
| A9/B8 | 0,33 | 1 h/180 | 6,3 |
| A18/B6 | 0,64 | 2 h/180 | 16,0 |
| A18/B8 | 0,18 | 1,5 h/180 | 16,1 |
| A18/B2 | 0,37 | 1,5 h/180 | 14,2 |

## Patentansprüche

### Patentansprüche für folgende Vertragsstaaten : BE, DE, FR, GB, IT, SE

1. Nichtwäßrige Kunststoffzubereitungen, im wesentlichen enthaltend
   A) 100 Gew.-Teile wenigstens eines feinteiligen festen Kunststoffs, der aus
       a) 30 bis 100 Gew.% Methacrylsäuremethylester (Monomeres I),

b) 0 bis 70 Gew.% eines Acrylsäureesters eines $C_1$- bis $C_8$-Alkanols oder eines Methacrylsäure-esters eines $C_2$- bis $C_8$-Alkanols oder eines Gemisches dieser Monomeren (Monomere II),

c) 0 bis 15 Gew.% einer 3 bis 5 C-Atome enthaltenden $\alpha,\beta$-monoethylenisch ungesättigten Mono- und/oder Dicarbonsäure (Monomere III),

d) 0 bis 20 Gew.% copolymerisierbaren Monomeren, die mindestens eine stickstoffbasische Gruppe und/oder eine Hydroxylgruppe enthalten (Monomere IV) und

e) 0 bis 5 Gew.% sonstigen copolymerisierbaren Monomeren (Monomere V), in polymerisierter Form, aufgebaut ist,

B) 30 bis 300 Gew.-Teile wenigstens eines flüssigen Polymerisats, das aus

a) 5 bis 100 Gew.% Glycidylacrylat und/oder -methacrylat (Monomere VI)

b) 0 bis 95 Gew.% eines Acrylsäure- oder Methacrylsäureesters eines $C_1$- bis $C_8$-Alkanols oder eines Gemisches dieser Monomeren (Monomere VII) und

c) 0 bis 30 Gew.% sonstigen copolymerisierbaren Monomeren (Monomere VIII), in polymerisierter Form, aufgebaut ist,

C) 0 bis 300 Gew.-Teile eines oder mehrerer inerter Füllstoffe und

D) 0 bis 50 Gew.-Teile eines oder mehrerer die Haftung verbessernder Mittel.

2. Kunststoffzubereitungen nach Anspruch 1, enthaltend als Komponente B) ein Copolymerisat, das zu 20 bis 60 Gew.% aus den Monomeren VI aufgebaut ist.

3. Kunststoffzubereitungen nach Anspruch 1 oder 2, enthaltend als Komponente B) ein Copolymerisat, das zu 30 bis 80 Gew.% aus den Monomeren VII aufgebaut ist.

4. Kunststoffzubereitungen nach den Ansprüchen 1 bis 3, enthaltend als Komponente A) einen feinteiligen Kunststoff, der in Tetrahydrofuran einen K-Wert von 20 bis 130 aufweist.

5. Kunststoffzubereitungen nach den Ansprüchen 1 bis 4, enthaltend als Komponente B) ein Copolymerisat, das in Tetrahydrofuran einen K-Wert von 8 bis 30 aufweist.

6. Verwendung der Kunststoffzubereitungen gemäß den Ansprüchen 1 bis 5 als Klebe-, Dichtungs- und Beschichtungsmassen.

**Patentansprüche für folgenden Vertragsstaat : ES**

1. Verfahren zur Herstellung nichtwäßriger Kunststoffzubereitungen, dadurch gekennzeichnet, daß man

A) 100 Gew.-Teile wenigstens eines festen feinteiligen Kunststoffs, der aus

a) 30 bis 100 Gew.% Methacrylsäuremethylester (Monomeres I),

b) 0 bis 70 Gew.% eines Acrylsäureesters eines $C_1$- bis $C_8$-Alkanols oder eines Methacrylsäure-esters eines $C_2$- bis $C_8$-Alkanols oder eines Gemisches dieser Monomeren (Monomere II),

c) 0 bis 15 Gew.% einer 3 bis 5 C-Atome enthaltenden $\alpha,\beta$-monoethylenisch ungesättigten Mono- und/oder Dicarbonsäure (Monomere III),

d) 0 bis 20 Gew.% copolymerisierbaren Monomeren, die mindestens eine stickstoffbasische Gruppe und/oder eine Hydroxylgruppe enthalten (Monomere IV) und

e) 0 bis 5 Gew.% sonstigen copolymerisierbaren Monomeren (Monomere V), in polymerisierter Form, aufgebaut ist,

B) 30 bis 300 Gew.-Teile wenigstens eines flüssigen Polymerisats, das aus

a) 5 bis 100 Gew.% Glycidylacrylat und/oder -methacrylat (Monomere VI)

b) 0 bis 95 Gew.% eines Acrylsäure- oder Methacrylsäureesters eines $C_1$- bis $C_8$-Alkanols oder eines Gemisches dieser Monomeren (Monomere VII) und

c) 0 bis 30 Gew.% sonstigen copolymerisierbaren Monomeren (Monomere VIII), in polymerisierter Form, aufgebaut ist,

C) 0 bis 300 Gew.-Teile eines oder mehrerer inerter Füllstoffe und

D) 0 bis 50 Gew.-Teile eines oder mehrerer die Haftung verbessernder Mittel

miteinander mischt.

2. Verfahren nach Anspruch 1, dadurch gekennzeichnet, daß man die Komponenten A), C) und D) in die Komponente B) einrührt.

3. Verfahren nach Anspruch 1 oder 2, dadurch gekennzeichnet, daß als Komponente B) ein Copolymerisiert eingesetzt wird, das zu 20 bis 60 Gew.% aus den Monomeren VI aufgebaut ist.

4.  Verfahren nach den Ansprüchen 1 bis 3, dadurch gekennzeichnet, daß als Komponente B) ein Copolymerisat eingesetzt wird, das zu 30 bis 80 Gew.% aus den Monomeren VII aufgebaut ist.

5.  Verfahren nach den Ansprüchen 1 bis 4, dadurch gekennzeichnet, daß als Komponente A) ein feinteiliger Kunststoff eingesetzt wird, der in Tetrahydrofuran einen K-Wert von 20 bis 130 aufweist.

6.  Verfahren nach den Ansprüchen 1 bis 5, dadurch gekennzeichnet, daß als Komponente B) ein Copolymerisat eingesetzt wird, das in Tetrahydrofuran einen K-Wert von 8 bis 30 aufweist.

7.  Verwendung der nach einem Verfahren gemäß der Ansprüche 1 bis 6 hergestellten Kunststoffzubereitungen als Klebe-, Dichtungs- und Beschichtungsmassen.

**Claims**

**Claims for the following Contracting States : BE, DE, FR, GB, IT, SE**

1.  A nonaqueous plastics formulation, essentially containing
    A) 100 parts by weight of at least one finely divided solid plastic which consists of
       a) from 30 to 100% by weight of methyl methacrylate (monomer I),
       b) from 0 to 70% by weight of an acrylate of a $C_1$-$C_8$-alkanol or of a methacrylate of a $C_2$-$C_8$-alkanol or of a mixture of these monomers (monomers II),
       c) from 0 to 15% by weight of an $\alpha,\beta$-monoethylenically unsaturated mono- and/or dicarboxylic acid of 3 to 5 carbon atoms (monomers III),
       d) from 0 to 20% by weight of copolymerizable monomers which contain at least one nitrogen base group and/or one hydroxyl group (monomers IV) and
       e) from 0 to 5% by weight of other copolymerizable monomers (monomers V), in polymerized form,
    B) from 30 to 300 parts by weight of at least one liquid polymer which consists of
       a) from 5 to 100% by weight of glycidyl acrylate and/or methacrylate (monomers VI),
       b) from 0 to 95% by weight of an acrylate or methacrylate of a $C_1$-$C_8$-alkanol or of a mixture of these monomers (monomers VII) and
       c) from 0 to 30% by weight of other copolymerizable monomers (monomers VIII), in polymerized form,
    C) from 0 to 300 parts by weight of one or more inert fillers and
    D) from 0 to 50 parts by weight of one or more adhesion-improving agents.

2.  A plastics formulation as claimed in claim 1, containing, as component B), a copolymer which is composed of from 20 to 60% by weight of the monomers VI.

3.  A plastics formulation as claimed in claim 1 or 2, containing, as component B), a copolymer which is composed of from 30 to 80% by weight of the monomers VII.

4.  A plastics formulation as claimed in any of claims 1 to 3, containing, as component A), a finely divided plastic which has a K value of from 20 to 130 in tetrahydrofuran.

5.  A plastics formulation as claimed in any of claims 1 to 4, containing, as component B), a copolymer which has a K value of from 8 to 30 in tetrahydrofuran.

6.  Use of a plastics formulation as claimed in any of claims 1 to 5 as an adhesive, sealing or coating material.

**Claims for the following Contracting State : ES**

1.  A process for preparing a nonaqueous plastics formulation, wherein
    A) 100 parts by weight of at least one solid finely divided plastic which consists of
       a) from 30 to 100% by weight of methyl methacrylate (monomer I),
       b) from 0 to 70% by weight of an acrylate of a $C_1$-$C_8$-alkanol or of a methacrylate of a $C_2$-$C_8$-alkanol or of a mixture of these monomers (monomers II),

c) from 0 to 15% by weight of an $\alpha,\beta$-monoethylenically unsaturated mono- and/or dicarboxylic acid of 3 to 5 carbon atoms (monomers III),

d) from 0 to 20% by weight of copolymerizable monomers which contain at least one nitrogen base group and/or one hydroxyl group (monomers IV) and

e) from 0 to 5% by weight of other copolymerizable monomers (monomers V), in polymerized form,

B) from 30 to 300 parts by weight of at least one liquid polymer which consists of

a) from 5 to 100% by weight of glycidyl acrylate and/or methacrylate (monomers VI),

b) from 0 to 95% by weight of an acrylate or methacrylate of a $C_1$-$C_8$-alkanol or of a mixture of these monomers (monomers VII) and

c) from 0 to 30% by weight of other copolymerizable monomers (monomers VIII), in polymerized form,

C) from 0 to 300 parts by weight of one or more inert fillers and

D) from 0 to 50 parts by weight of one or more adhesion-improving agents,

are mixed together.

2. A process as claimed in claim 1, wherein the components A), C) and D) are stirred into component B).

3. A process as claimed in claim 1 or 2, wherein a copolymer which contains from 20 to 60% by weight of the monomers VI is used as component B).

4. A process as claimed in any of claims 1 to 3, wherein a copolymer which contains from 30 to 80% by weight of the monomers VII is used as component B).

5. A process as claimed in any of claims 1 to 4, wherein a finely divided plastic which has a K value of from 20 to 130 in tetrahydrofuran is used as component A).

6. A process as claimed in claims 1 to 5, wherein a copolymer which has a K value of from 8 to 30 in tetrahydrofuran is used as component B).

7. Use of a plastics formulation prepared by a process as claimed in any of claims 1 to 6, as an adhesive, sealing or coating material.


**Revendications**

**Revendications pour les Etats contractants suivants : BE, DE, FR, GB, IT, SE**

1. Préparations de matières plastiques non aqueuses, qui contiennent, pour l'essentiel,

A) 100 parties en poids d'au moins une matière plastique solide, en fines particules, qui est constituée de

a) 30 à 100% en poids de méthacrylate de méthyle (monomère I),

b) 0 à 70% en poids d'un ester de l'acide acrylique d'un alcanol en $C_1$ à $C_8$, ou d'un ester de l'acide méthacrylique d'un alcanol en $C_2$ à $C_8$, ou d'un mélange de ces monomères (monomère II)

c) 0 à 15% en poids d'un acide mono- et/ou dicarboxylique $\alpha,\beta$-monoéthyléniquement insaturé, contenant de 3 à 5 atomes de carbone (monomère III),

d) 0 à 20% en poids de monomères copolymérisables, qui contiennent au moins un groupe azoté basique et/ou un groupe hydroxyle (monomère IV) et

e) 0 à 5% en poids d'autres monomères copolymérisables (monomère V), sous forme polymérisée,

B) 30 à 300 parties en poids d'au moins un polymère liquide, qui est constitué de

a) 5 à 100% en poids d'acrylate de glycidyle et/ou de méthacrylate de glycidyle (monomère VI),

b) 0 à 95% en poids d'un ester de l'acide acrylique ou de l'acide méthacrylique d'un alcanol en $C_1$ à $C_8$, ou d'un mélange de ces mono mères (monomère VII) et

c) 0 à 30% en poids d'autres monomères copolymérisables (monomère VIII), sous forme polymérisée,

C) 0 à 300 parties en poids d'une ou plusieurs charges inertes et

D) 0 à 50 parties en poids d'un ou plusieurs agents qui améliorent l'adhérence.

2. Préparations de matières plastiques selon la revendication 1, qui contiennent, à titre de composant B), un copolymère constitué de jusqu'à 20 à 60% en poids des monomères VI.

3. Préparations de matières plastiques selon la revendication 1 ou 2, qui contiennent, à titre de composant B), un copolymère constitué de jusqu'à 30 à 80% en poids des monomères VII.

4. Préparations de matières plastiques selon les revendications 1 à 3, qui contiennent, à titre de composant A), une matière plastique à fines particules, qui présente une valeur K de 20 à 130 dans le tétrahydrofuranne.

5. Préparations de matières plastiques selon les revendications 1 à 4, qui contiennent, à titre de composant B), un copolymère qui présente une valeur K de 8 à 30 dans le tétrahydrofuranne.

6. Utilisation des préparations de matières plastiques selon les revendications 1 à 5 à titre de matières adhésives, d'étanchéité ou d'obturation et de revêtement ou rechampissage.

**Revendications pour l'Etat contractant suivant : ES**

1. Procédé de fabrication de préparations de matières plastiques, caractérisé en ce que l'on mélange les uns aux autres
   A) 100 parties en poids d'au moins une matière plastique solide, en fines particules, qui est constituée de
      a) 30 à 100% en poids de méthacrylate de méthyle (monomère I),
      b) 0 à 70% en poids d'un ester de l'acide acrylique d'un alcanol en $C_1$ à $C_8$, ou d'un ester de l'acide méthacrylique d'un alcanol en $C_2$ à $C_8$, ou d'un mélange de ces monomères (monomère II)
      c) 0 à 15% en poids d'un acide mono- et/ou dicarboxylique $\alpha,\beta$-monoéthyléniquement insaturé, contenant de 3 à 5 atomes de carbone (monomère III),
      d) 0 à 20% en poids de monomères copolymérisables, qui contiennent au moins un groupe azoté basique et/ou un groupe hydroxyle (monomère IV) et
      e) 0 à 5% en poids d'autres monomères copolymérisables (monomère V), sous forme polymérisée,
   B) 30 à 300 parties en poids d'au moins un polymère liquide, qui est constitué de
      a) 5 à 100% en poids d'acrylate de glycidyle et/ou de méthacrylate de glycidyle (monomère VI),
      b) 0 à 95% en poids d'un ester de l'acide acrylique ou de l'acide méthacrylique d'un alcanol en $C_1$ à $C_8$, ou d'un mélange de ces monomères (monomère VII) et
      c) 0 à 30% en poids d'autres monomères copolymérisables (monomère VIII), sous forme polymérisée,
   C) 0 à 300 parties en poids d'une ou plusieurs charges inertes et
   D) 0 à 50 parties en poids d'un ou plusieurs agents qui améliorent l'adhérence.

2. Procédé suivant la revendication 1, caractérisé en ce que l'on incorpore les composants A), C) et D) sous agitation dans le composant B).

3. Procédé suivant la revendication 1 ou 2, caractérisé en ce que l'on utilise, à titre de composant B, un copolymère constitué de jusqu'à 20 à 60% en poids des monomères VI

4. Procédé suivant les revendications 1 à 3, caractérisé en ce que l'on utilise, à titre de composant B, un copolymère constitué de jusqu'à 30 à 80% en poids des monomères VII.

5. Procédé suivant les revendications 1 à 4, caractérisé en ce que l'on utilise, à titre de composant A), une matière plastique à fines particules, qui présente une valeur K de 20 à 130 dans le tétrahydrofuranne.

6. Procédé suivant les revendications 1 à 5, caractérisé en ce que l'on utilise, à titre de composant B), un copolymère qui présente une valeur K de 8 à 30 dans le tétrahydrofuranne.

7. Utilisation des préparations de matières plastiques suivant les revendications 1 à 6 à titre de matières adhésives, d'étanchéité ou d'obturation et de revêtement ou rechampissage.